# EUROPÄISCHE PATENTSCHRIFT

(11) **EP 0 787 679 B1**
(45) Veröffentlichungstag und Bekanntmachung des Hinweises auf die Patenterteilung: **31.01.2001**
(21) Anmeldenummer: 96120060.7
(22) Anmeldetag: 13.12.1996
(51) Int. Cl.: C01B 3/58, C01B 3/32, H01M 8/06

(54) **Verfahren und Vorrichtung zur Gewinnung eines wasserstoffreichen, kohlenmonoxidarmen Gases**
Process and apparatus for the recovery of a gas rich in hydrogen and poor in carbon monoxide
Procédé et dispositif pour la récupération d'un gaz riche en hydrogène et pauvre en monoxyde de carbone

(30) Priorität: 30.01.1996 DE 19603222
(43) Veröffentlichungstag der Anmeldung: 06.08.1997
(73) Patentinhaber: XCELLSIS GmbH, 73230 Kirchheim / Teck-Nabern (DE)
(72) Erfinder: Böhm, Gustav, 88662 Überlingen (DE); Staneff, Theodor, 88699 Bermatingen (DE); Steinwandel, Jürgen, Dr., 88690 Oberuhldingen (DE)
(74) Vertreter: Kocher, Klaus-Peter

(56) Entgegenhaltungen:
- EP-A- 0 306 945
- EP-A- 0 650 922
- DE-A- 4 420 753
- US-A- 4 847 231
- US-A- 4 865 624
- CONVERSION TECHNOLOGIES (CONTINUED), ELECTROCHEMICAL CONVERSION, BOSTON, AUG. 4 - 9, 1991, Bd. 3, 4.August 1991, INSTITUTE OF ELECTRICAL AND ELECTRONICS ENGINEERS, Seiten 642-649, XP000299778 AMPHLETT J C ET AL: "SOME DESIGN CONSIDERATIONS FOR A CATALYTIC METHANOL STEAM REFORMER FOR A PEM FUEL CELL POWER GENERATING SYSTEM"
- PATENT ABSTRACTS OF JAPAN vol. 013, no. 099 (E-724), 8.März 1989 & JP 63 274063 A (SANYO ELECTRIC CO LTD), 11.November 1988,
- CHEMICAL ABSTRACTS, vol. 114, no. 20, 20.Mai 1991 Columbus, Ohio, US; abstract no. 187929, S. KASAOKA ET AL.: "Reaction performance of methanol reforming with steam over various impregnated and coprecipitated copper catalysts" XP002030506 & KAGAKU KOGAKU RONBUNSHU, Bd. 17, Nr. 2, 1991, JAPAN, Seiten 288-296,
- PATENT ABSTRACTS OF JAPAN vol. 017, no. 030 (C-1018), 20.Januar 1993 & JP 04 250851 A (NIPPON SHOKUBAI CO LTD), 7.September 1992,

## Beschreibung

Die Erfindung bezieht sich auf ein Verfahren und eine Vorrichtung zur Gewinnung eines wasserstoffreichen, kohlenmonoxidarmen Gases, das insbesondere für die Speisung von Niedertemperatur-Brennstoffzellen in Elektrofahrzeugen verwendbar ist, wobei mittels einer Methanolreformierungsreaktion unter Verwendung eines Cu- und ZrO₂-haltigen Katalysatormaterials aus Methanol ein wasserstoffreiches Gasgemisch erzeugt wird, dessen CO-Gehalt in einem nachgeschalteten Prozeß auf weniger als 100ppm verringert wird.

Ein derartiges Verfahren und eine derartige Vorrichtung sind in der Patentschrift US 4.840.783 offenbart. Das Bereitstellen der Cu-Komponente im Reformierungsreaktor beinhaltet dort z.B. das Einbringen von CuO in den Reaktor und das anschließende Reduzieren desselben zu elementarem Kupfer mittels Durchleiten eines N₂/ H₂-Gemisches mit einem H₂-Gehalt von 3% bei Temperaturen zwischen 100°C und 270°C für 72h. Das Ausgangsgasgemisch des Methanolreformierungsreaktors wird in einer nachgeschalteten Stufe zur Verringerung der CO-Konzentration einer selektiven Methanisierung unterworfen.

Eine detaillierte Prozeßführung zur selektiven Methanisierung ist in der Patentschrift US 3.615.164 offenbart, wobei dort ein Ruthenium- oder Rhodium-Katalysator auf einem Aluminiumoxid-Trägermaterial verwendet wird. Mit diesem Verfahren läßt sich die CO-Konzentration im Gasgemisch auf weniger als 100ppm absenken. Neben der selektiven Methanisierung kann bekanntermaßen der CO-Gehalt in einem wasserstoffreichen Gasgemisch alternativ durch selektive Oxidation unter Verwendung eines Platin-, Rhodium- oder Ruthenium-Katalysatormaterials auf einem Al₂O₃-Träger, siehe die Patentschrift US 3.631.073, oder durch selektive Wasserstoffabtrennung mittels einer aus einer Palladium-Legierung bestehenden Membran, siehe die Offenlegungsschrift JP 62-105901 (A), verringert werden.

In Chemical Abstracts, Band 115, 1991, Nr. 240892d ist die Charakterisierung eines Ruthenium/Titan-Katalysators zur selektiven Methanisierung von Kohlendioxid bei Raumtemperatur und Atmosphärendruck erwähnt.

In Chemical Abstracts, Band 74, 1971, Nr. 35106u, ist die selektive Methanisierung von Kohlenmonoxid in einem Gasgemisch, das Wasserstoff, Kohlendioxid und Kohlenmonoxid enthält, bei Temperaturen im Bereich zwischen 125°C und 300°C unter Verwendung rutheniumhaltiger Katalysatoren angegeben.

In den Offenlegungsschriften EP 0 650 922 A1 und EP 0 650 923 A1 sind Verfahren und Vorrichtungen zur katalytischen Entfernung von Kohlenmonoxid in einem wasserstoffreichen Gas mittels selektiver Oxidation und/oder selektiver Methanisierung beschrieben. Für die selektive Oxidation werden Pt/Al₂O₃-, Ru/Al₂O₃- oder Pt-Zeolith-Trägerkatalysatormaterialien vorgeschlagen. Zur selektiven Methanisierung wird die Verwendung eines Ru/Rl₂O₃-Trägerkatalysatormaterials vorgeschlagen.

Der Erfindung liegt als technisches Problem die Bereitstellung eines Verfahrens und einer Vorrichtung der eingangs genannten Art zugrunde, mit denen sich mit möglichst geringem Aufwand innerhalb eines mobilen Systems ein zur Speisung von Niedertemperatur-Brennstoffzellen geeignetes, wasserstoffreiches und kohlenmonoxidarmes Gas gewinnen läßt.

Dieses Problem wird durch ein Verfahren mit den Merkmalen des Anspruchs 1 sowie durch eine Vorrichtung mit den Merkmalen des Anspruchs 5 gelöst. Hierbei zeigt sich, daß durch die Kombination einer Methanolreformierungsreaktion unter Verwendung eines Cu- und ZrO₂-haltigen Katalysatormaterials mit einer nachgeschalteten Kohlenmonoxidentfernung mittels selektiver Methanisierung an einem speziellen Ruthenium-Katalysatormaterial mit TiO₂-Träger und/oder mittels selektiver Oxidation unter Verwendung eines Platin-Katalysatormaterials mit TiO₂-Träger eine sehr hohe Methanolumsetzungsrate von über 98% bei hoher integraler Katalysatorbelastung von bis zu 10Nm³H₂/kgₖₐₜh sowie eine CO-Konzentration von weniger als 100ppm, vorzugsweise unter 50ppm, erreicht werden können, wobei eine instationäre Reaktionsführung mit periodisch wechselnder Strömungsrichtung angewandt wird.

In einer Weiterbildung der Erfindung nach Anspruch 2 ist vorgesehen, die Cu-Komponente des Katalysators dadurch bereitzustellen, daß CuO mittels eines N₂/H₂-Gemisches mit einem H₂-Gehalt von mehr als 5% und bis zu 20% reduziert wird, wodurch ein ausreichend aktives Katalysatormaterial erhalten wird, das die oben genannte, hohe integrale Katalysatorbelastung bewältigt, wozu außerdem eine isotherme Reaktionsführung mit hoher Gasströmungsgeschwindigkeit beitragen kann.

Es zeigt sich, daß für die selektive Oxidation des Kohlenmonoxids eine in Anspruch 3 angegebene Zusammensetzung des TiO₂-haltigen Katalisatorträgermaterials günstig ist.

Von Vorteil für die selektive Methanisierung und/oder die selektive Oxidation ist des weiteren eine in Anspruch 4 angegebene Wahl der Temperatur von unterhalb von 200°C bzw. 120°C, wobei beide Arten der selektiven CO-Umwandlung gekoppelt angewendet werden können.

Eine nach Anspruch 6 weitergebildete Vorrichtung beinhaltet einen speziell auf eine hohe integrale Katalysatorbelastung mit hoher Methanolumsetzungsrate ausgelegten Methanolreformierungsreaktor in Rohrbündel-Bauweise.

Gemäß Anspruch 7 ist zur Verbesserung der Wärmeübertragungsfähigkeit der Rohrbündelanordnung des Methanolreformierungsreaktors vorgesehen, das oder die Reaktionsrohre auf ihrer dem Temperierfluid zugewandten Seite mit Wärmeübertragungsrippen und/oder auf ihrer dem Katalysatormaterial zugewandten Seite mit Wärmeleitungsstegen zu versehen.

Eine bevorzugte Ausführungsform der Erfindung ist in den Zeichnungen dargestellt und wird nachfolgend beschrieben. Hierbei zeigen:
- Fig. 1: ein Blockdiagramm einer Vorrichtung zur Gewinnung eines wasserstoffreichen, kohlenmonoxidarmen Gases für die Speisung einer PEM-Brennstoffzelle eines Elektrofahrzeuges und
- Fig. 2: eine Längsschnittansicht eines in der Vorrichtung von Fig. 1 verwendeten Methanolreformierungsreaktors in U-Rohrbündel-Bauweise.

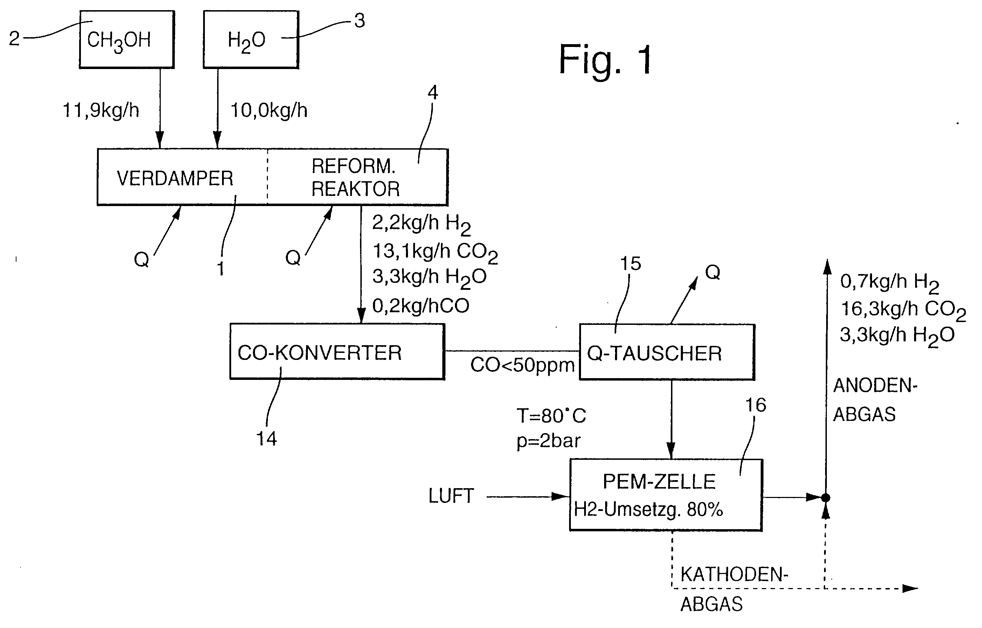

Fig. 1 zeigt in einer schematischen Übersichtsdarstellung die erforderlichen Reaktions- und verfahrenstechnischen Komponenten und Schritte zur Gewinnung eines im wesentlichen aus Wasserstoff bestehenden Gases, das zur Speisung einer PEM-Brennstoffzelle in einem mobilen Elektroantrieb verwendet werden kann, aus leicht in flüssiger Form im Fahrzeug speicherbarem Methanol. Die in Fig. 1 angegebenen Massenströme beziehen sich auf eine Reaktorleistung von 25Nm³H₂/h.

Bei der Anlage von Fig. 1 wird einem Verdampfer (1) Methanol aus einem Methanoltank (2) mit einer Rate von 11,9kg/h und Wasser aus einem Wasserspeicher (3) mit einer Rate von 10,0kg/h zugeführt. Im Verdampfer (1) werden die späteren Reaktionspartner Methanol und Wasser gemeinsam oder getrennt im gewünschten Stöchiometrieverhältnis unter Zuführung von Wärme (Q) verdampft und auf eine Reaktoreingangstemperatur von ca. 250°C überhitzt. Das überhitzte Methanol/Wasser-Gasgemisch wird in einen Methanolreformierungsreaktor (4) eingespeist, in welchem die Methanolreformierungsreaktion bei einem Druck von bis zu 10bar, vorzugsweise von ca. 5bar und einer Temperatur zwischen 220°C und 280°C erfolgt.

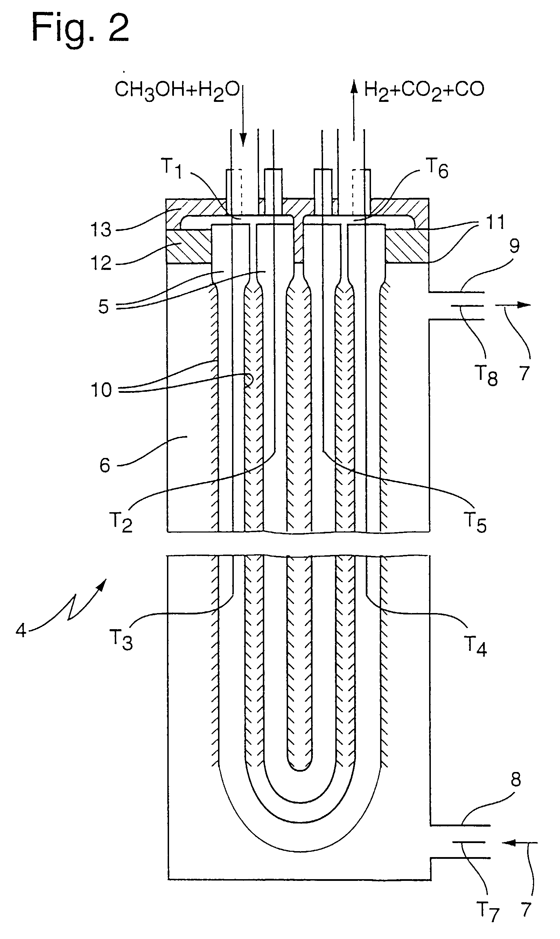

In Fig. 2 ist ein für die Methanolreformierung geeigneter Reaktor mit U-Rohrbündel-Aufbau dargestellt. Die Anforderungen an den Reaktor für den fahrzeugspezifischen Einsatz sind neben den oben genannten Druck- und Temperaturbereichen durch folgende, die Auslegung des Reaktors bestimmende Parameter gegeben. Der Methanolumsatz ist größer 98%, und der CO-Gehalt im Ausgangsgasgemisch liegt unter 2%, die Konzentration sonstiger Begleitprodukte unter 1000ppm. Die Reaktordynamik liegt für Lastsprünge von etwa 100% im Sekundenbereich, und die integrale Katalysatornutzung liegt vorzugsweise über 4Nm³H₂/kgₖₐₜh. Des weiteren liegt die Stöchiometrie des zugeführten Gasgemischs CH₃OH:H₂O zwischen 1:1,3 und 1:2,0. Diese Anforderungen sind nur durch den Einsatz hochaktiver und selektiv arbeitender Katalysatoren in Verbindung mit einer optimierten Verfahrensführung erreichbar, da thermodynamisch die Reaktion zu den gewünschten Produkten H₂ und CO₂ keinesfalls favorisiert ist. Die gewünschten Umsetzungsraten von größer als 98% erfordern Reaktionstemperaturen von mehr als 200°C, wobei hohe Reaktionsdrücke die Ausbeute thermodynamisch gesehen verschlechtern. Dieser Druckeffekt ist jedoch nicht besonders stark ausgeprägt und durch moderate Temperaturerhöhung kompensierbar, sofern der absolute Druck 20bar nicht überschreitet.

Sowohl aus allgemeinen betriebstechnischen Gründen als auch hinsichtlich der thermodynamischen CO-Produktion ist andererseits eine möglichst geringe Betriebstemperatur wünschenswert. Daraus leitet sich der Bedarf nach Verwendung von metallhaltigen Katalysatorsystemen mit hoher Aktivität ab. In dieser Hinsicht besonders aktive Edelmetallkatalysatoren der Platingruppe produzieren allerdings neben den gewünschten Reaktionsprodukten vergleichsweise viel Methan, was analog auch für nickelhaltige Katalysatoren gilt. Es hat sich gezeigt, daß zu diesem Zweck Niedertemperaturkatalysatoren auf Cu/ZnO-Basis mit Al₂O₃- und besonders mit ZrO₂-Trägermaterial geeignet sind, wie sie für die Methanolsynthese gebräuchlich sind.

Damit allein läßt sich allerdings die wegen der für mobile Anwendungen geforderten Reaktorkompaktheit erforderliche, vergleichsweise hohe integrale Katalysatorbelastung von mindestens 4Nm³H₂/kgₖₐₜh nicht erzielen. Ergänzend wird daher vorliegend ein aufgrund der endothermen Bruttoreaktion erforderlicher hoher Wärmefluß in das Katalysatorbett eingebracht, wozu der Reaktor speziell ausgelegt ist.

Wie aus Fig. 2 ersichtlich, beinhaltet der Methanolreformierungsreaktor (4) eine Rohrbündelanordnung mit mehreren, vom Reformierungsgasgemisch durchströmten U-Rohren (5), die sich vertikal in einer von einem Thermoöl (7) durchströmten Kammer (6) befinden, wobei das Thermoöl (7) innerhalb der Kammer (6) von einem im unteren Bereich angeordneten Einlaß (8) entlang der U-Rohre (5) zu einem im oberen Bereich angeordneten Auslaß (9) strömt. Ersichtlich kann daher für das Gasgemisch eine Parallel- oder Gegenstromführung relativ zur Thermoölströmung eingesetzt werden. Das Gasgemisch wird dabei in etwa mit derjenigen Temperatur in den Reaktor (4) eingeleitet, die das eintretende Thermoöl (7) besitzt. Als Rohrmaterial wird ein metallischer Werkstoff, vorzugsweise Edelstahl, eingesetzt. Im Inneren enthalten die Rohre (5) ein Katalysatorbett mit dem Cu-haltigen Katalysatormaterial mit ZrO₂-haltigem Träger in Form einer Pelletschüttung. Die Rohre sind auf ihrer Außenseite mit Wärmeübertragungsrippen (10) versehen, um den Wärmeübergang von dem erhitzten Thermoöl (7) in das Rohrinnere zu fördern. Dem gleichen Zweck dienen an der Rohrinnenseite vorgesehene, nicht gezeigte Wärmeleitungsstege. Zur Verbesserung des Wärmeeintrages in das Katalysatorbett im Rohrinneren trägt außerdem eine hohe Gasströmungsgeschwindigkeit bei, wobei ein ausreichender Wärmeeintrag bei gleichzeitig hoher mittlerer Strömungsgeschwindigkeit grundsätzlich geringe Reaktionsrohrdurchmesser erfordert. An verschiedenen Stellen sind Temperaturmeßsonden (T₁ bis T₈) zur Überwachung der Einhaltung der Temperaturbedingungen in den Reaktor (4) eingebracht.

Andererseits ergibt die erforderliche Anpassung der Pelletdurchmesser an die Rohrdurchmesser zur Berücksichtigung des Problems der Randgängigkeit eine praktische Limitierung hinsichtlich des minimal möglichen Reaktionsrohrdurchmessers, da kleinere Katalysatorpelletdurchmesser einen höheren Strömungswiderstand bedeuten und somit der Gegendruck rasch ansteigt, was den Wirkungsgrad beeinträchtigt. Es hat sich gezeigt, daß günstige Verhältnisse dann erreicht werden, wenn der mittlere Pelletdurchmesser zwischen 1/5 und 1/10 des Rohrinnendurchmessers beträgt und der Rohrinnendurchmesser zwischen lcm und 2,5cm beträgt, wobei der obere Wert wegen ansonsten nicht mehr kompensierbaren Wärmetransportproblemen nicht überschritten werden sollte.

Für das Cu-haltige Katalysatormaterial sind im Hinblick auf spätere Langzeitbeständigkeit definierte Aktivierungsbedingungen entscheidend. Vor Gebrauch liegt zur besseren Handhabung das Kupfer ganz oder teilweise als stabiles CuO vor. Nach Beschikkung der Reaktionsrohre (5) mit entsprechend größenangepaßter Katalysatorkörnung wird die Katalysatorschüttung durch Reduktion des Kupferoxides zu elementarem Kupfer aktiviert. Dazu wird ein N₂/H₂-Gemisch mit einem H₂-Gehalt von mindestens 5% und höchstens 20% eingesetzt, wobei die Strömungsgeschwindigkeit derart einzustellen ist, daß an keiner Stelle des Katalysatorbettes eine Temperatur von 300°C überschritten wird. Dies wird im vorliegenden Fall bei Raumgeschwindigkeiten von 2000h⁻¹ oder mehr erreicht. Die Vorheiztemperatur des Katalysatormaterials ist dabei auf Werte zwischen minimal 150°C und maximal 200°C zu begrenzen. Der Reaktionsdruck beträgt bei den angegebenen Bedingungen lbar absolut. Die Temperaturbegrenzung vermeidet eine ausgeprägte Kupfer-Agglomeration zu größeren Partikeln, was zu einem Aktivitätsverlust führen würde. Nach der Aktivierungsprozedur weist die Katalysatorschüttung im anschließenden Reaktionsbetrieb die größtmögliche Aktivität auf, die jeweils von der gewählten Betriebstemperatur abhängt.

Dabei ergibt sich, daß für einen Methanolumsatz von über 98% bei einer Reaktionsrohrlänge von maximal 160cm eine Reaktortemperatur von mindestens 260° gewählt werden sollte. Geringere Reaktionstemperaturen erfordern längere Reaktionslaufwege und damit größere Reaktorrohrlängen. Mit den genannten Parametern wird durch den Reformierungsreaktor (4) gemäß Fig. 2 eine Dauerleistung von 10Nm³H₂/h mit einer Katalysatormasse von 1,3kg erreicht, indem der Reaktor (4) eine integrale Katalysatorbelastung von ca. 8Nm³H₂/kgₖₐₜh erlaubt. Für eine praktisch 100%ige Methanolkonversion ist in diesem Fall eine Reaktortemperatur von mindestens etwa 280°C erforderlich.

Weiter ergibt sich eine Ansprechzeit des Reaktors (4) bei Lastsprüngen von 10%, d.h. 1Nm³H₂/h, auf 100%, d.h. 10Nm³H₂/h, im Sekundenbereich, wie dies für den Einsatz in Elektrofahrzeugen erforderlich ist. Entscheidend für dieses Lastwechselverhalten ist ein optimaler Wärmehaushalt des Reaktors bei minimal möglichem Katalysatorvolumen. Dabei kann der integrale Wärmeeintrag in den Reaktor (4) durch die Umpumpgeschwindigkeit des Thermoölkreislaufes in Verbindung mit dessen Heizleistung gesteuert werden.

Die thermoölgefüllte Kammer (6) des Reaktors (4) wird von einem mit Graphitdichtungen (11) versehenen Deckel (12) abgedeckt, der die U-Rohre (5) hält. Auf den Deckel (12) ist eine Haube (13) aufgesetzt, die neben dem Gaseinlaß und dem Gasauslaß nicht näher gezeigte Mittel zur steuerbaren Absperrung der einzelnen Reaktionsrohre (5) beinhaltet. Damit ist eine Betriebsführung möglich, bei der unter Vollast alle Reaktionsrohre (5) des Reaktors (4) gleichmäßig an- und durchströmt werden, während im Teillastbereich die An- und Durchströmung einzelner Reaktionsrohre durch die mechanischen Regelungsmittel abgedrosselt wird, während die verbleibenden Reaktionsrohre mit der Katalysatorbelastung des Vollastpunktes weiterbetrieben werden.

Bei allen technisch relevanten Betriebszuständen ergeben sich im Ausgangsgasgemisch des Reformierungsreaktors (4) CO-Konzentrationen, die deutlich oberhalb der Toleranzschwelle von ungefähr 50ppm für PEM-Brennstoffzellen liegen, wie aus der in Fig. 1 angegebenen Gaszusammensetzung erkennbar. Da dieser Schwellwert reaktionstechnisch über die Reformierungsreaktion selbst nicht erreichbar ist, wird die CO-Konzentration in einem nachgeschalteten CO-Konverter (14) verringert, wie in Fig. 1 dargestellt. Dieser CO-Konverter (14) enthält ein TiO₂/Al₂O₃/Ru/RuOₓ-Katalysatormaterial mit einem Ru/RuOₓ-Anteil zwischen 2,0% und 4,0% und einer TiO₂-Zusammensetzung von 75% Rutil und 25% Anatas zur Durchführung einer selektiven Methanisierung, d.h. Hydrierung, von CO im CO₂-Überschuß als Tieftemperaturreaktion mit einer Maximaltemperatur von ca. 200°C sowie alternativ oder zusätzlich ein TiO₂/Al₂O₃/Pt-Katalysatormaterial mit einem Pt-Anteil zwischen 0,5% und 1,5% und ebenfalls einer TiO₂-Zusammensetzung von 75% Rutil und 25% Anatas zur Bewirkung einer selektiven Oxidation von CO im H₂-Überschuß als Tieftemperaturreaktion mit einer Maximaltemperatur von ca. 120°C. Die beiden Reaktionen können dabei je nach Bedarf einzeln oder gekoppelt vorgesehen sein. Beide Reaktionen sind stark exotherm, weshalb im CO-Konverter (14) eine streng isotherme Reaktionsführung oder eine instationäre Reaktorbetriebsweise mit periodisch wechselnder Gasströmungsrichtung verwendet wird. Diese Vorgehensweise ist alternativ zu einer Membrantechnik zu sehen, bei welcher der Wasserstoff im Ausgangsgasgemisch des Reformierungsreaktors mittels Diffusion durch eine Composite-Membranstruktur mit einer aktiven Trennschicht aus einer Palladiumlegierung, die eine Dicke von weniger als 20nm aufweist, sowie einer angepaßten mikroporösen, keramischen oder metallischen Stützstruktur hindurch bei Temperaturen oberhalb von 250°C abgetrennt wird.

In jedem Fall stellt der CO-Konverter (14) ausgangsseitig ein wasserstoffreiches Gas zur Verfügung, dessen CO-Konzentration unter 50ppm liegt. Bezugnehmend auf Fig. 1 wird dieses wasserstoffreiche Gas einem Wärmetauscher (15) zugeführt, der das Gas auf ca. 80°C abkühlt und einer bei dieser Temperatur sowie bei einem Druck von ca. 2bar arbeitenden PEM-Brennstoffzelle (16) zuführt, der außerdem Luftsauerstoff zugeführt wird. Die Brennstoffzelle (16) ermöglicht eine H₂-Umsetzung von etwa 80%.

Die Anlage von Fig. 1 eignet sich aufgrund ihres kompakt realisierbaren Aufbaus bei optimierter Verfahrensdurchführung insbesondere für den Einsatz in Elektrofahrzeugen mit PEM-Brennstoffzellen und Methanolspeicher.

## Patentansprüche

1. Verfahren zur Gewinnung eines wasserstoffreichen, kohlenmonoxidarmen Gases, insbesondere für die Speisung von Niedertemperatur-Brennstoffzellen in Elektrofahrzeugen, bei dem
- aus Methanol ein wasserstoffreiches Gasgemisch mittels einer Methanolreformierungsraktion unter Verwendung eines Cu/ZrO₂- oder Cu/ZnO/ZrO₂-Katalysatormaterials erzeugt und
- in einem nachgeschalteten Prozeß Kohlenmonoxid aus dem wasserstoffreichen Gasgemisch bis auf eine Konzentration von weniger als etwa 100ppm entfernt wird,
**dadurch gekennzeichnet, daß**
- die Kohlenmonoxidentfernung in dem nachgeschalteten Prozeß unter Anwenden einer instationären Reaktionsführung mit periodisch wechselnder Strömungsrichtung durch selektive Methanisierung unter Verwendung eines TiO₂/Al₂O₃/Ru/RuOₓ-Trägerkatalysatormaterials mit einem Ru/RuOₓ-Anteil zwischen 2% und 4% und einer TiO₂-Zusammensetzung von 75% Rutil und 25% Anatas und/oder durch selektive Oxidation unter Verwendung eines Pt- und TiO₂-haltigen Katalysatormaterials erfolgt.

2. Verfahren nach Anspruch 1, weiter
**dadurch gekennzeichnet, daß**
zur Bereitstellung der Cu-Komponente des in einem Reaktorbett eines Methanolreformierungsreaktors vorliegenden Katalysatormaterials für die Methanolreformierungsreaktion CuO in den Reformierungsreaktor eingebracht und anschließend mittels Durchleiten eines N₂/H₂-Gemisches mit einem H₂-Gehalt zwischen 5% und 20% zu elementarem Cu reduziert wird, wobei die Strömungsgeschwindigkeit des N₂/H₂-Gemisches so gewählt wird, daß die Temperatur an jeder Stelle des Katalysatorbettes nicht über 300°C ansteigt.

3. Verfahren nach Anspruch 1 oder 2, weiter
**dadurch gekennzeichnet, daß**
für die selektive Oxidation ein TiO₂/Al₂O₃/Pt-Trägerkatalysatormaterial mit einem Pt-Anteil zwischen 0,5% und 1,5% und einer TiO₂-Zusammensetzung von 75% Rutil und 25% Anatas verwendet wird.

4. Verfahren nach einem der Ansprüche 1 bis 3, weiter
**dadurch gekennzeichnet, daß**
die selektive Methanisierung bei Temperaturen unterhalb 200°C und/oder die selektive Oxidation bei Temperaturen unterhalb 120° durchgeführt werden.

5. Vorrichtung zur Gewinnung eines wasserstoffreichen, kohlenmonoxidarmen Gases, insbesondere für die Speisung von Niedertemperatur-Brennstoffzellen in Elektrofahrzeugen, mit
- einem Methanolreformierungsreaktor (4) und
- einem dem Methanolreformierungsreaktor nachgeschalteten CO-Konverter (14),
**dadurch gekennzeichnet, daß**
- der CO-Konverter (14) zur Durchführung einer selektiven Methanisierung und/oder einer selektiven Oxidation des Kohlenmonoxids eingerichtet ist und zur selektiven Methanisierung ein TiO₂/Al₂O₃/Ru/RuOₓ-Trägerkatalysatormaterial mit einem Ru/RuOₓ-Anteil zwischen 2% und 4% und einer TiO₂-Zusammensetzung von 75% Rutil und 25% Anatas bzw. zur selektiven Oxidation ein TiO₂/Al₂O₃/Pt-Trägerkatalysatormaterial mit einem Pt-Anteil zwischen 0,5% und 1,5% und einer TiO₂-Zusammensetzung von 75% Rutil und 25% Anatas enthält und jeweils instationär mit periodisch wechselnder Strömungsrichtung bei Temperaturen unterhalb von 200°C für die selektive Methanisierung bzw. unterhalb von 120° für die selektive Oxidation betrieben wird.

6. Vorrichtung nach Anspruch 5, weiter
**dadurch gekennzeichnet, daß**
- der Methanolreformierungsreaktor (4) als Rohrbündelreaktor mit einer U-Rohrbündelanordnung (5) für eine integrale Katalysatorbelastung zwischen 1Nm³H₂/kgₖₐₜh und 10Nm³H₂/kgₖₐₜh und eine Methanolumsetzungsrate von wenigstens 98% ausgelegt ist, wozu
- das wenigstens eine Rohr (5) der Rohrbündelanordnung einen Innendurchmesser zwischen lcm und 2,5cm aufweist, von einer Temperierfluidströmung (7) umgeben ist und eine Katalysatorpelletschüttung enthält, deren mittlerer Pelletdurchmesser zwischen 1/5 und 1/10 des Rohrinnendurchmessers beträgt.

7. Vorrichtung nach Anspruch 6, weiter
**dadurch gekennzeichnet, daß**
das wenigstens eine Rohr (5) der Rohrbündelanordnung auf seiner dem Temperierfluid (7) zugewandten Seite mit Wärmeübertragungsrippen (10) und/oder auf der dem Katalysatormaterial zugewandten Seite mit Wärmeleitungsstegen versehen ist.

## Claims

1. Process for the production of a hydrogen -rich gas with low carbon monoxide content, in particular for feeding to low-temperature fuel cells in electrically powered vehicles, in which:
- a hydrogen-rich gas mixture is produced from methanol by means of a methanol reforming reaction using a Cu/ZrO₂ or Cu/ZnO/ZrO₂ catalyst material, and
- in a subsequent process carbon monoxide is removed from the hydrogen-rich gas mixture down to a concentration of less than about 100 ppm,
**characterised in that**
- the carbon monoxide removal in the subsequent process takes place by application of a discontinuous reaction mode with periodically alternating flow direction by selective methanisation using a TiO₂/Al₂O₃/Ru/RuOₓ - support catalyst material with a Ru/RuOₓ fraction between 2.0% and 4.0% and a TiO₂ composition of 75% rutile and 25% anatase and/or by selective oxidation using a catalyst material containing Pt and TiO₂.

2. Process according to Claim 1, further
**characterised in that**
to prepare the Cu component of the catalyst material present in a reactor bed of a methanol reforming reactor for the methanol reforming reaction, CuO is introduced into the reforming reactor and then reduced to elementary Cu by passing through a N₂/H₂ mixture with a H₂ content between 5% and 20%, the flow rate of the N₂/H₂ mixture being chosen such that the temperature at any point in the catalyst bed does not rise above 300°C.

3. Process according to Claims 1 and 2, further
**characterised in that**
for the selective oxidation, a TiO₂/Al₂O₃/Pt catalyst material with a Pt fraction between 0.5% and 1.5% and a TiO₂ composition of 75% rutile and 25% anatase is used.

4. Process according to any of Claims 1 to 3, further
**characterised in that**
the selective methanisation is carried out at temperatures below 200°C and/or the selective oxidation at temperatures below 120°C.

5. Device for the production of a hydrogen-rich gas with low carbon monoxide content, in particular for feeding to low-temperature fuel cells in electrically powered vehicles, with:
- a methanol reforming reactor, and
- a CO converter (14) connected after the methanol reforming reactor,
**characterised in that**
the CO converter (14) is designed to carry out a selective methanisation and/or a selective oxidation of the carbon monoxide, and for the selective methanisation a TiO₂/Al₂O₃/Ru/RuOₓ - support catalyst material having a Ru/RuOₓ fraction between 2% and 4% and a TiO₂ composition of 75% rutile and 25% anatase is used, or respectively for the selective oxidation a TiO₂/Al₂O₃/Pt - support catalyst material with a Pt fraction between 0.5% and 1.5% and a TiO₂ composition of 75% rutile and 25% anatase is used, and each is operated discontinuously with periodically alternating flow direction, at respective temperatures below 200°C for the selective methanisation or below 120°C for the selective oxidation.

6. Device according to Claim 5, further
**characterised in that**
- the methanol reforming reactor (4) is designed as a tube bundle reactor with an arrangement of U-shaped tubes (5) for an integral catalyst loading between 1 Nm³H₂/kg_{cat}.h and 10 Nm³H₂/kg_{cat}.h and a methanol transformation rate of at least 98%, for which purpose
- at least one tube (5) of the tube bundle arrangement has an inside diameter between 1 cm and 2.5 cm, is surrounded by a flow of heating fuel (7), and contains a loose filling of catalyst pellets whose mean pellet diameter is between 1/5 and 1/10 of the inside diameter of the tube.

7. Device according to Claim 5, further
**characterised in that**
at least one tube (5) of the tube bundle arrangement is provided on its side facing the heating fluid (7) with heat transfer fins (10) and/or on its side facing the catalyst material with heat-conducting webs.

## Revendications

1. Procédé de production d'un gaz pauvre en monoxyde de carbone, riche en hydrogène, en particulier pour l'alimentation de cellules à combustible à basse température dans des véhicules à propulsion électrique, dans lequel
- à partir de méthanol, on produit un mélange de gaz riche en hydrogène, par une réaction de reformage du méthanol, en utilisant un matériau catalyseur de type Cu/ZrO₂ ou Cu/Zno/ZrO₂, et
- dans un processus conduit en aval, on élimine le monoxyde de carbone du mélange de gaz riche en hydrogène, jusqu'à descendre à une concentration inférieure à environ 100 ppm,
caractérisé en ce que
- l'élimination du monoxyde de carbone s'effectue dans le processus aval, en appliquant un processus de réaction instationnaire avec un changement périodique du sens d'écoulement, par méthanisation sélective en utilisant un matériau catalyseur de type TiO₂/Al₂O₃/Ru/RuOₓ, avec une proportion en Ru/RuOₓ comprise entre 2 % et 4 % et une composition du TiO₂ de 75 % de rutile et de 25 % d'anatase et/ou par oxydation sélective, en utilisant un matériau catalyseur contenant du Pt et du TiO₂.

2. Procédé selon la revendication 1, caractérisé en outre en ce, que pour préparer les composants contenant du Cu du matériau catalyseur, présent dans un lit de réacteur de reformage du méthanol, pour la réaction de reformage du méthanol, on introduit CuO dans le réacteur de reformage et ensuite, en faisant passer un mélange N₂/H₂ ayant une teneur en H₂ comprise entre 5 % et 20 %, on procède à une réduction pour obtenir du Cu élémentaire, la vitesse d'écoulement du mélange N₂/H₂ étant choisie telle que la température en tout endroit de catalyseur ne dépasse pas 300 °C.

3. Procédé selon la revendication 1 ou 2, caractérisé en ce que l'on utilise pour effectuer l'oxydation sélective un matériau catalyseur support TiO₂/Al₂O₃/Pt contenant une proportion de Pt comprise entre 0,5 % et 1,5 % et une composition à base de TiO₂ constituée de 75 % de rutile et de 25 % d'anatase.

4. Procédé selon l'une quelconque des revendications 1 à 3, caractérisé en outre en ce que la méthanisation sélective est effectuée à des températures inférieures à 200°C et/ou l'oxydation sélective est effectuée à des températures inférieures à 120°C.

5. Dispositif de production d'un gaz pauvre en oxyde de carbone, riche en hydrogène, en particulier pour l'alimentation de cellules à combustibles à basse température dans des véhicules à propulsion électrique, comportant :
- un réacteur de reformage du méthanol (4), et
- un convertisseur de CO (14) mis en circuit en aval du réacteur de reformage de méthanol,
caractérisé en ce que
- le convertisseur de CO (14) est agencé pour effectuer une méthanisation sélective et/ou une oxydation sélective du monoxyde de carbone et, pour effectuer une méthanisation sélective, contient un matériau catalyseur support TiO₂/Al₂O₃/Ru/RuOₓ ayant une proportion Ru/RuOₓ comprise entre 2 % et 4 % et une composition du TiO₂ formée de 75 % de rutile et de 25 % d'anatase, ou, pour effectuer une oxydation sélective, contient un matériau catalyseur support TiO₂/Al₂O₃/Pt ayant une proportion de Pt comprise entre 0,5 % et 1,5 % et une composition du TiO₂ formée de 75 % de rutile et de 25 % d'anatase, et est chaque fois mis en fonctionnement de façon instationnaire avec un changement périodique du sens d'écoulement, à des températures inférieures à 200°C pour effectuer la méthanisation sélective, ou inférieures à 120°C pour effectuer l'oxydation sélective.

6. Dispositif selon la revendication 5, caractérisé en outre en ce que
- le réacteur de reformage du méthanol (4) est conçu sous la forme d'un réacteur à faisceau tubulaire, comportant un agencement de faisceau tubulaire en U (5) pour une charge de catalyseur intégrale comprise entre 1 Nm³H₂/kg_{cat}h et 10 Nm³H₂/kg_{cat}h et un taux de conversion du méthanol d'au moins 98 %, ce pourquoi
- le au moins un tube (5) de l'agencement à faisceau tubulaire présente un diamètre intérieur compris entre 1 cm et 2,5 cm, est entouré par un écoulement de fluide d'équilibrage de température (7) et contient une masse en vrac constituée de boulettes de catalyseur, dont le diamètre de moyen de boulette est compris entre 1/5 et 1/10 du diamètre intérieur de tube.

7. Dispositif selon la revendication 6, caractérisé en outre en ce que le au moins un tube (5) de l'agencement à faisceau tubulaire est muni, sur sa face tournée vers le fluide d'équilibrage de température (7), d'ailettes de transfert de chaleur (10) et/ou, sur la face tournée vers le matériau catalyseur, de nervures de conduction de chaleur.
